# EUROPÄISCHE PATENTSCHRIFT

(11) **EP 2 460 236 B1**
(45) Veröffentlichungstag und Bekanntmachung des Hinweises auf die Patenterteilung: **01.05.2013**
(21) Anmeldenummer: 10731535.0
(22) Anmeldetag: 14.07.2010
(51) Int. Cl.: H01R 13/66, H01R 13/641

(54) **LADEKABELSTECKER ZUR VERBINDUNG EINES ELEKTROFAHRZEUGES MIT EINER LADESTATION**
CHARGINGCABLE AND CONNECTOR TO CONNECT AN ELECTRIC VEHICLE WITH A CHARGING STATION
CÂBLE ET CONNECTEUR POUR CHARGER ET RELIER UN VÉHICULE ÉLECTRIQUE ET UNE BORNE DE CHARGEMENT

(30) Priorität: 27.07.2009 DE 102009034886
(43) Veröffentlichungstag der Anmeldung: 06.06.2012
(73) Patentinhaber: RWE AG, 45128 Essen (DE)
(72) Erfinder: GAUL, Armin, 59379 Selm (DE); DIEFENBACH, Ingo, 59425 Unna (DE)
(74) Vertreter: Schippan, Ralph
(86) Internationale Anmeldenummer: PCT/EP2010/060166
(87) Internationale Veröffentlichungsnummer: WO 2011/012451

(56) Entgegenhaltungen:
- GB-A- 2 438 979
- US-A- 5 349 535
- US-A- 5 596 258
- US-A- 5 696 367
- US-A- 5 758 414
- US-A- 6 091 223
- US-B1- 6 210 036

## Beschreibung

Der Gegenstand betrifft einen Ladekabelstecker zur Verbindung eines Elektrofahrzeuges mit einer Ladestation, wobei der Ladekabelstecker ein Gehäuse mit zum Anschluss an eine Ladestation bzw. ein Fahrzeug ausgebildeten elektrischen Kontakten aufweist. Darüber hinaus betrifft der Gegenstand ein einen solchen Stecker aufweisendes Ladekabel sowie ein System bestehend aus dem Ladekabel und mit diesem verbundenem Elektrofahrzeug und/oder mit diesem verbundener Ladestation.

Die Verbreitung von Elektrofahrzeugen wird in naher Zukunft erheblich zunehmen. Mit der Verbreitung von Elektrofahrzeugen ergeben sich neue Anforderungen an die Versorgungsinfrastruktur. Elektrofahrzeuge müssen nicht nur im häuslichen Umfeld, sondern auch außerhalb des häuslichen Umfeldes mit elektrischer Energie versorgt werden können. Hierzu sollten an öffentlichen Orten Ladestationen zur Verfügung gestellt werden, an denen Nutzer von Elektrofahrzeugen elektrische Energie beziehen können. Die Ladestationen können beispielsweise an öffentlichen Parkplätzen, in Parkhäusern oder auch an privaten Parkplätzen, beispielsweise im Bereich des Arbeitsplatzes des Nutzers, angeordnet sein. Benutzer von Elektrofahrzeugen könnten dann ihre Fahrzeuge an solche Ladestationen anschließen. Während ihrer Abwesenheit kann die Batterie der Elektrofahrzeuge aufgeladen werden.

Problematisch bei der Verwendung von stationären, in öffentlichen Bereichen zugänglichen Ladestationen ist jedoch, dass die Struktur der Elektrofahrzeuge heterogen sein wird, was bedeutet, dass unterschiedlichste Elektrofahrzeuge mit unterschiedlichsten Steckern und Steckersystemen betrieben werden.

Die Verwendung des jeweiligen Steckers bzw. Steckersystems hängt im Wesentlichen von der Art des gewünschten Ladevorgangs ab. Dabei wird zum einen unterschieden zwischen der Dauer des Ladevorgangs: bei einem normalen Ladevorgang, welcher sich über eine längere Zeitdauer bei einem niedrigen bis mäßigen Ladestrom erstreckt, sind aus dem Haushaltsbereich bekannte Ladekabel mit kleinem oder mittleren Kabelquerschnitt einsetzbar. Bei einem Schnellladevorgang, welcher innerhalb kürzerer Zeit mit einer höheren Stromstärke erfolgt, sind Ladekabel mit entsprechen größerem Querschnitt notwendig. Beispielsweise dürfen Ladekabel mit einem Leitungsquerschnitt von 6 mm² für maximal 32A verwendet werden, während solche Ladekabel mit einem Querschnitt von 16 mm², wie sie in Schnellladestationen eingesetzt werden, für Stromstärken bis zu 63A zugelassen sind.

Unterschieden wird auch in der Art des Kabelanschlusses: der Anschluss des Elektrofahrzeuges an das Wechselstromnetz in der Ladestation kann entweder unter Verwendung eines Ladekabels und eines Steckers, welche dauerhaft am Elektrofahrzeug angebracht sind, erfolgen oder unter Verwendung einer lösbaren Kabelgarnitur mit Leitungsverbindern am Elektrofahrzeug und an der Ladestation.

Üblicherweise verfügt ein herkömmliches Anschluss- oder Verlängerungskabel über einen Stecker an der einen und eine Kupplung an seiner anderen Seite. Kabelsysteme, die vor allem im Industriebereich oder bei größeren Stromverbrauchern im Haushaltsbereich eingesetzt werden, sind als sogenannte CEE-Steckverbinder bekannt und existieren in vielen Varianten. Sie sind so entworfen worden, dass jeweils immer nur der Stecker eines Typs in die Buchse bzw. Dose desselben Typs passt. Dabei sind die Beschaffenheit und der Durchmesser des jeweiligen Verbinders von der Strombelastbarkeit abhängig, wobei zwischen den Stromstärken 16A, 32A, 63A und 125A unterschieden wird. Bei dem bekannten CEE-System ist es nicht möglich, Stecker und Buchsen verschiedener Stromstärken miteinander zu verbinden. Bei diesen Steckverbindersystemen werden nur die Kupplungen als spannungsführende Bauteile angesehen und entsprechend werden auch nur die Kontakte der Kupplungen berührungssicher isoliert ausgeführt.

Solche bekannten CEE-Steckverbinder sind jedoch im Zusammenhang mit dem Ladevorgang von Elektrofahrzeugen nicht geeignet. Ein Grund ist, dass nicht nur eine Energieeinspeisung in die Batterie des Elektrofahrzeuges erfolgen kann, sondern umgekehrt auch ein Energierückübertragungsprozess vom Elektrofahrzeug auf die Ladestation ermöglicht werden soll. Daher ist es erforderlich, dass bei solchen Ladekabeln sowohl die Kontakte in der Kupplung als auch die Kontakte im Stecker berührungssicher isoliert sind. Alternativ dazu ist es auch möglich, ein Ladekabel mit zwei Steckern zu verwenden.

Um eine entsprechende Universalität der Anschlussmöglichkeiten zu gewährleisten, scheidet daher bei Elektrofahrzeugen die bekannte Abstufung der Stecker- bzw. Kupplungsgrößen nach den zulässigen Stromstärken aus, bei der eine kleine Steckergröße einer Stromstärke von 16A, eine mittlere Steckergröße einer Stromstärke von 32A und eine große Steckergröße einer Stromstärke von 63A entspricht.

Vielmehr ist es gewünscht, dass ein Elektrofahrzeug mit demselben Ladekabel an eine Steckdose in der Ladestation angeschlossen werden kann, unabhängig davon wie hoch die jeweilige Ladestromstärke ist. Die Verwendung einer einheitlichen Baugröße für den Steckverbinder eines Ladekabels erfordert jedoch eine Angabe der für das Ladekabel bzw. den Steckverbinder maximal zulässigen Stromstärke, um seine Überlastung zu vermeiden. Es ist bekannt, für eine solche Angabe eine sogenannte "Kodierung" der maximalen Stromstärke vorzunehmen, in dem innerhalb des Gehäuses des Steckverbinders ein ohmscher Widerstand angeordnet ist. Für unterschiedliche zulässige Stromstärken werden unterschiedliche Widerstandswerte eingesetzt. Bei der Verbindung des Steckverbinders mit dem Elektrofahrzeug bzw. mit der Ladestation wird der Wert des ohmschen Widerstandes von der jeweiligen Stelle erfasst und daraus der Wert für die maximal zulässige Stromstärke des Ladekabels ermittelt. In Kenntnis der von der Ladestation maximal zu erbringenden Ladestromstärke und ferner unter Berücksichtigung der vom Elektrofahrzeug angeforderten Energiemenge erfolgt nun eine Abstimmung dahingehend, dass der optimale Ladestrom unter den gegebenen Bedingungen eingestellt wird, wobei dieser durch das schwächste Glied in der Kette des kompletten Ladekreises bestimmt wird.

Allerdings weist die beschriebene Kodierung der maximal zulässigen Stromstärke des Ladekabels den Nachteil auf, dass nur bestimmte diskrete Zahlenwerte für die Stromstärke vorgegeben werden können. Im Falle einer Kontaktverschlechterung durch Alterungsprozesse oder Korrosionen der Steckverbinder, welche zu einer Widerstandserhöhung im Bereich des Steckverbinders führen, entsteht daher eine Unfallgefahr bis hin zu einem Abbrand der Steckverbindung. Die wesentliche Ursache liegt darin, dass durch die höheren Wärmeverluste im Bereich der verschlechterten Kontaktverbindung eine unzulässige Temperaturerhöhung eintritt, wenn mit der Ladestromstärke gearbeitet wird, die dem vorgegebenen festen Kodierungswert entspricht.

Eine gattungsgemäße Steckervorrichtung ist aus der US 5 596 258 A bekannt, bei der ein Ladekabel ein Gehäuse aufweist, welches über elektrische Anschlusskontakte zum Anschließen dies Ladekabels an eine Anschlusseinrichtung einer Ladestation oder eines Elektrofahrzeugs verfügt.

Der vorliegenden Erfindung liegt die Aufgabe zugrunde, eine Vorrichtung bzw. ein System der eingangs genannten Art dahingehend zu verbessern, dass eine höhere Sicherheit gegen die beschriebenen thermischen Gefahren erreicht werden kann.

Diese Aufgabe wird durch eine Steckervorrichtung zur Verbindung eines Elektrofahrzeuges mit einer Ladestation gelöst, welche folgende Merkmale aufweist:
- ein Gehäuse,
- elektrische Anschlusskontakte zu einer Anschlusseinrichtung in der Ladestation oder in dem Elektrofahrzeug,
- ein in dem Gehäuse angeordnetes Kodierungsmittel für den Wert der über das Ladekabel übertragbaren Stromstärke,
- im Bereich des Gehäuses angeordnete Temperaturerfassungsmittel,
- eine Auswerteeinrichtung zur Berechnung eines temperaturkorrigierten Kodierungswertes und
- ein Kommunikationsmittel für dessen Übertragung an eine Ladestromsteuereinrichtung.

Darüber hinaus wird diese Aufgabe auch gelöst durch ein mit einer solchen Steckervorrichtung ausgerüstetes Ladekabel.

Des weiteren wird diese Aufgabe durch ein System gelöst bestehend aus einem mit einer solchen Steckervorrichtung ausgerüsteten Ladekabel sowie einem Elektrofahrzeug mit einer Aufnahmeeinrichtung für den Anschlussstecker.

Des weiteren wird diese Aufgabe durch ein System gelöst bestehend aus einem mit einer solchen Steckervorrichtung ausgerüsteten Ladekabel und einer für ein Elektrofahrzeug geeigneten Ladestation mit einer Aufnahmeeinrichtung für die Steckervorrichtung.

Die Erfindung zeichnet sich dadurch aus, dass durch die Temperaturerfassung im Bereich der Steckervorrichtung, also entweder direkt im Steckergehäuse oder in dessen unmittelbarer Umgebung, z.B. in der ihm zugeordneten Aufnahmeeinrichtung, eine Korrektur des durch das Kodiermittel vorgegebenen Wertes für die maximal zulässige Stromstärke erfolgen kann. Wenn im Bereich des Steckergehäuses bzw. der Aufnahmeeinrichtung eine Temperaturveränderung, beispielsweise bedingt durch Alterungs- oder Korrosionsprozesse, detektiert wird, erfolgt eine entsprechende Korrektur des Vorgabewertes des Kodiermittels für die Stromstärke. Insbesondere wird bei einer detektierten gegenüber der Raumtemperatur höheren Temperatur eine entsprechende Reduzierung des Ladestromes bewirkt. Hierdurch wird zwar die Ladezeit gegebenenfalls signifikant verlängert, jedoch kann auf eine vollständige Abschaltung des Ladestromkreises verzichtet werden, welche ansonsten bei einer thermischen Überlast von Seiten der Ladestation aus erfolgen würde.

Eine Ausführungsform der Erfindung sieht vor, dass das Kodierungsmittel und das Temperaturerfassungsmittel einer gemeinsamen Auswerteeinrichtung zugeordnet sind, als deren Ausgangssignal der temperaturkorrigierte Kodierungswert weiter verarbeitet werden kann.

Vorteilhaft und hochgenau ist eine Realisierung möglich, wenn das Temperaturerfassungsmittel ein Thermoelement enthält.

Wenn das Temperaturerfassungsmittel in der Anschlusseinrichtung, insbesondere in einer Steckdose, der Ladestation oder des Elektrofahrzeugs angeordnet ist, lassen sich alterungs- oder korrosionsbedingte Defekte kompensieren, deren Ursache an dieser Stelle liegen.

Wenn das Temperaturerfassungsmittel im Gehäuse angeordnet ist, lassen sich alterungs- oder korrosionsbedingte Defekte kompensieren, deren Ursache im Gehäuse liegen.

Eine besonders vorteilhafte Lösung ergibt sich, wenn das Temperaturerfassungsmittel ein temperaturabhängiger elektrischer Widerstand, insbesondere ein Thermistor, ist, welcher je nach Anforderung einen positiven oder negativen Temperaturkoeffizienten aufweisen kann.

Als Kodierungsmittel ist ein ohmscher Widerstand geeignet, zu welchem der Thermistor parallel oder in Reihe geschaltet sein kann.

Jedem Wert für die zulässiges Stromstärke (16A, 32A, 63A) des Ladekabels kann dabei jeweils ein bestimmter ohmscher Widerstandswert entsprechen.

Die Temperaturkennlinien der Schaltungseinheit, z.B. aus Thermistor und ohmschem Widerstand gebildet, sind bevorzugt jeweils derart gewählt und aufeinander abgestimmt, dass für unterschiedliche Stromstärkewerte sich jeweils nicht überlappende Bereiche ergeben. Dies bedeutet, dass sich bei einer bestimmten Stromstärke, z.B. 32 A, der Gesamtwiderstandswert der Schaltung nur maximal in einem solchen Maße temperaturbedingt verändert, dass sich der Wertebereich nicht mit dem Wertebereich, der für eine andere Stromstärke gilt, überschneidet. Hierdurch kann im gesamten in Frage kommenden Temperaturbereich immer eine eindeutige Zuordnung zur vom verwendeten Ladekabel gehöriger "Nenn"-Stromstärke erfolgen.

Weiter bevorzugt ist neben der Leistungsübertragungsleitung für den Ladestrom eine Pilotsignalleitung für die Steuerungssignale vorgesehen, im Rahmen derer der temperaturkorrigierte Kodierungswert zu dem fahrzeugseitigen Ladesteuergerät übertragbar ist.

Das Kodierungsmittel kann dabei sowohl zwischen einem Pilotsignalanschluss und dem Schutzleiter der Pilotsignalleitung, z.B. einem Masseleiter, als auch zwischen zwei Anschlüssen der Pilotsignalleitung angeordnet sein.

Eine praktisch bevorzugt einsetzbare Ausführungsform sieht vor, dass das Kodierungsmittel dem "Plug Present" Anschluss der Steckervorrichtung zugeordnet ist.

Eine erfindungsgemäß ausgestaltete Steckervorrichtung bildet bevorzugt je eines der beiden Enden eines Ladekabels. Dort können Verbindungen erfolgen mit jeweils einer Aufnahmeeinrichtung auf Seiten des Elektrofahrzeugs und auf Seiten der Ladestation.

Um festzustellen, ob die vom Elektrofahrzeug entnommene Stromstärke der entsprechend dem temperaturkorrigierten Kodierungswert zugelassenen entspricht, ist auf Seiten der Ladestation ein Stromerfassungsmittel zur, insbesondere phasenbezogenen, Erfassung des vom Elektrofahrzeug bezogenen Stromes vorgesehen, wobei das Stromerfassungsmittel bevorzugt Bestandteil eines Energiemengenzählers ist.

Der Gegenstand der vorliegenden Erfindung wird im Folgenden anhand einer Zeichnung näher erläutert. Dabei zeigen
- Figur 1: ein Blockschaltbild für den Aufbau eines Systems bestehend aus einem Elektrofahrzeug und einer über ein Ladekabel damit verbundenen Ladestation und
- Figur 2: eine Detaildarstellung einer Steckervorrichtung nach einem Ausführungsbeispiel der Erfindung;
- Figur 3a, 3b: elektrische Schaltbilder zur Anordnung des temperaturkorrigierten Kodierungsmittels;
- Figur 4: eine graphische Darstellung der Temperaturkennlinien bei unterschiedlichen Stromstärkewerten.

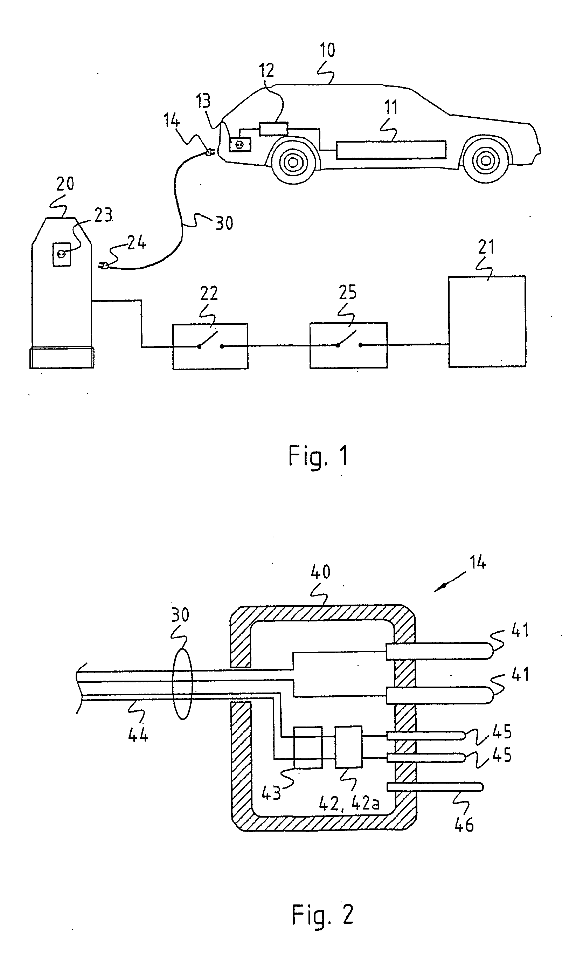

In Figur 1 ist ein Elektrofahrzeug 10 dargestellt, welches eine Batterie 11 aufweist, die über eine Ladestromsteuereinrichtung 12 aufgeladen wird. Hierzu ist das Elektrofahrzeug 10 über ein Ladekabel 30 mit einer Ladestation 20 verbunden.

Das Ladekabel 30 weist auf seinen beiden Enden jeweils eine Steckervorrichtung 14, 24 auf, wobei der Stecker 14 des einen Endes mit einer Steckdose 13 am Elektrofahrzeug 10 und der Stecker 24 des anderen Endes des Ladekabels 30 mit einer Steckdose 23 in der Ladestation 20 verbindbar ist.

Die Ladestation 20 weist eine elektrische Stromversorgung von Seiten einer Energieversorgungseinrichtung 21 auf. Die Stromversorgung erfolgt über eine Versorgungsleitung, die mittels eines Schützes 22 ein- und ausgeschaltet wird und über einen Leitungsschutzschalter und/oder einen FI-Schalter 25 abgesichert ist. Von einem Energiemengenzähler (nicht dargestellt) wird in entsprechend bekannter Weise die von dem Fahrzeug 10 entnommene elektrische Energiemenge erfasst.

Figur 2 zeigt in Detailansicht einen Schnitt durch eine Steckervorrichtung 14 des Ladekabels 30. Diese weist ein Gehäuse 40 auf, in welches einerseits die Leistungsleitungen, z.B. L1, L2, L3, N, PE für den Ladestrom des Ladekabels 30 münden und dessen Ausgang durch elektrische Kontakte 41 gebildet ist, welche mit der entsprechenden Steckdose, im Ausführungsbeispiel der Steckdose 13 des Elektrofahrzeugs 10, lösbar in Verbindung gebracht werden können. Darüber hinaus weist die Steckervorrichtung 14 weitere elektrische Kontakte 45 auf, die zum Anschluss von mindestens einer Pilotsignalleitung 44 zur Übertragung von Pilotsignalen dient. Schließlich ist in der Steckervorrichtung 14 ein Hilfskontakt 46 vorgesehen, bei dem es sich um einen sog. "Plug Present" Kontakt handelt, d.h. um einen Kontakt mit der Funktion anzuzeigen, ob ein Stecker vorhanden ist oder nicht.

Der Ladestrom fließt in bekannter Weise vom Ladekabel 30 durch die entsprechenden Komponenten der Steckervorrichtung 14 über deren elektrischen Kontakte 41 in die über die Ladestromsteuereinrichtung 12 zur Batterie 11 des Elektrofahrzeugs 10 führenden Leitungen.

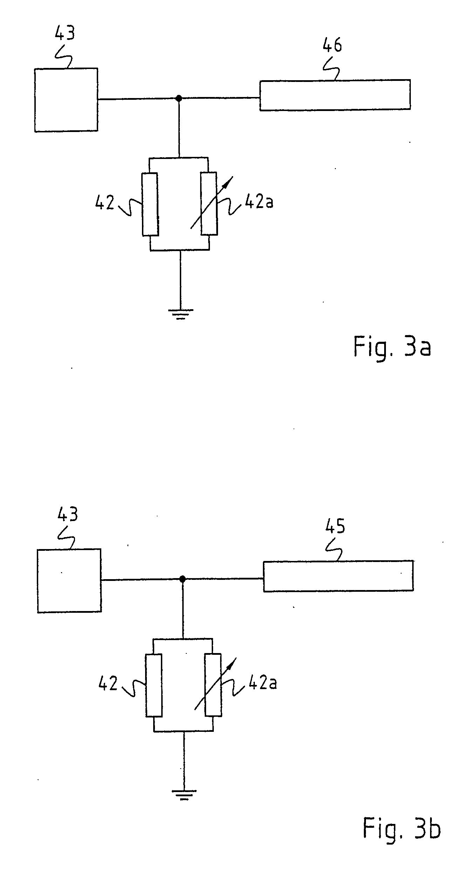

Innerhalb des Gehäuses 40 ist eine elektrische Schaltung bestehend aus einem Ohmschen Widerstand 42 und einem dazu parallel geschalteten Thermistor 42a angeordnet. Die Figuren 2, 3a und 3b zeigen jeweils Varianten für die Anordnung dieser Parallelschaltung. Die Parallelschaltung aus dem Ohmschen Widerstand 42 und dem dazu parallel geschalteten Thermistor 42a kann entweder (Fig.2) zwischen zwei Pilotsignalleitungen 45 angeordnet sein. Alternativ dazu kann diese entweder (Fig. 3a) zwischen dem "Plug Present" Anschluss 46 und Masse angeordnet sein oder zwischen einem Pilotsignalanschluss 45 (Fig.3b) und Masse. In jedem der drei genannten Fälle für die Anordnung der Schaltung ist den beiden Bauelementen 42, 42a eine Auswerteeinrichtung 43 nachgeordnet. Die in der Auswerteeinrichtung 43 angeordnete Schaltung hat die Aufgabe, den Gesamtwiderstandswert der Parallelschaltung der Bauelemente 42, 42a zu erfassen und daraus ein Steuersignal für die temperaturkorrigierte zugelassene Stromstärke des Ladekabels 30 zu generieren.

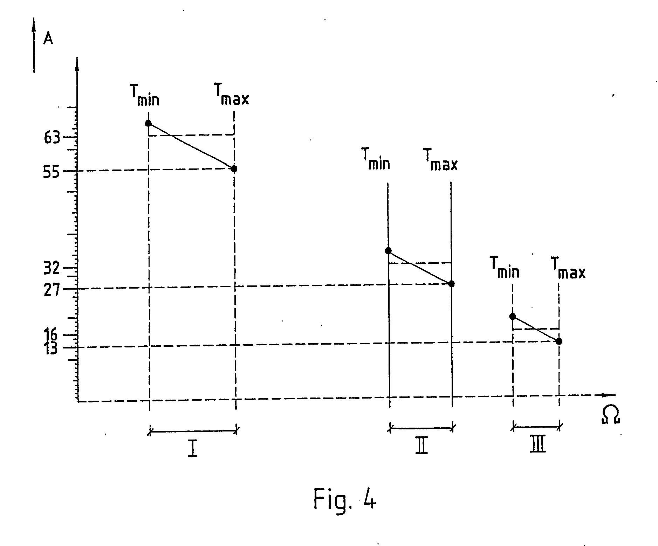

Dies wird im Zusammenhang mit Figur 4 näher erläutert: Figur 4 zeigt eine Kennlinienschar, in der jede Kurve einer bestimmten Sollstromstärke des Ladekabels 30 zugeordnet ist. Die obere Kurve gehört zur Stromstärke 63A, die mittlere zur Stromstärke 32A und die untere zur Stromstärke 16A. Auf der Abszisse des Diagramms ist der gemessene Wert des Gesamtwiderstandes aufgetragen. Die waagerechten gestrichelten Kennlinien entsprechen den Werten für den jeweiligen Widerstand ohne Berücksichtigung der Temperaturabhängigkeit, während die durchgezogenen Kennlinien die temperaturabhängige Veränderung des Gesamtwiderstandes berücksichtigen. Innerhalb des jeweiligen durch eine obere (Tmax) und eine untere (Tmin) Grenztemperatur definierten Temperaturintervalls lassen sich drei Bereiche I,II,III definieren. Durch die Auswerteeinrichtung 43 erfolgt eine Zuordnung zwischen gemessenem Gesamtwiderstand und temperaturkorrigierter Sollstromstärke. Zum Beispiel reduziert sich gemäß der oberen Kennlinie die zugelassene Stromstärke gegenüber dem Nennwert von 63A bei Raumtemperatur auf einen Wert von z.B. 55A bei der oberen Grenztemperatur Tmax. Entsprechendes gilt für die Kurven der niedrigeren Stromstärken. Die Bemessung der ohmschen Widerstandswerte und der jeweiligen temperaturabhängigen Widerstände erfolgt derart, dass es keine Werteüberschneidungen zwischen den Bereichen I, II, III gibt, so dass im gesamten Temperaturbereich eine eindeutige Zuordnung zwischen gemessenem Gesamtwiderstandswert und zugelassener Stromstärke resultiert.

Die dargestellte Vorrichtung arbeitet wie folgt:

Wenn seitens des Benutzers des Elektrofahrzeugs 10 ein Laden der Batterie 11 erwünscht ist, wird die Steckdose 13 mit einem Ladekabel 30 verbunden, in dem der Stecker 14 in die Steckdose 13 eingesetzt wird. Gleichermaßen wird in der ausgewählten Ladestation 20, bei der es sich beispielsweise um eine öffentliche Ladestation im Bereich eines Parkplatzes handeln kann, das andere Ende des Ladekabels 30 mit dem Stecker 24 in die Steckdose 23 der Ladestation 20 eingesteckt.

Das vom Fahrzeugnutzer verwendete Ladekabel 30 weist einen bestimmten Kupferquerschnitt seiner Kabelleitungen auf, wodurch die maximal zulässige elektrische Stromstärke definiert ist, die über das Ladekabel 30 fließen kann. Zur Kodierung, d.h. Festlegung, dieses Wertes weist das Ladekabel 30 im Bereich zumindest eines seiner beiden Stecker 14, 24 einen Ohmschen Widerstand 42 auf, dessen Nennwert der zulässigen Stromstärke eindeutig zugeordnet ist. Jedem für ein Ladekabel 30 jeweils zulässigen Nennstromstärkewert, z.B. 16A, 32A oder 63A, entspricht dabei ein bestimmter ohmscher Widerstandswert. Durch die schaltungstechnische Kopplung des ohmschen Widerstands 42 mit einem durch den Thermistor 42a gebildeten temperaturabhängigen Widerstand ergibt sich ein Gesamtwiderstandswert, dessen Größe von der - je nach gewähltem Temperaturmesspunkt - im Gehäuse 40 des Steckers 14 oder seiner Umgebung herrschenden Temperatur abhängt.

Über die Pilotsignalleitung 44 kann dieser Wert auf Seiten des Elektrofahrzeuges 10 oder im Bereich der Ladestation 20 messtechnisch erfasst werden. Beide Komponenten (Elektrofahrzeug 10, Ladestation 20) verständigen sich ausgehend von dem erfassten Wert auf den für das System zulässigen maximalen Ladestrom. Dieser wird durch das schwächste Glied in der Kette, bestehend aus Ladeleitung für das Elektrofahrzeug, Ladekabel 30, Ladestromkreis der Ladestation 20, bestimmt.

Die von der Auswerteeinrichtung 43 wie oben erläutert erfasste temperaturbedingte Veränderung des Kodierungswertes für die Stromstärke hat nun zur Folge, dass bei Temperaturerhöhung, beispielsweise durch defekte oder gealterte Stecker mit schlechtem Kontaktverhalten, eine geringere zulässige Stromstärke für das Ladekabel 30 signalisiert wird. Dieser temperaturkorrigierte Kodierungswert wird nun über die Pilotsignalleitung 44 auf die Ladestromsteuereinrichtung 12 im Elektrofahrzeug 10 übertragen, wodurch eine gegenüber der Sollstromstärke des Ladekabels 30, z.B. 32 A, herabgesetzte Stromstärke eingestellt wird, mit der das Fahrzeug nunmehr geladen wird. Dies führt somit dazu, dass in dem gesamten System - gebildet aus Elektrofahrzeug, Ladekabel und Ladestation - die für den Ladevorgang verwendete Stromstärke niedriger zu wählen ist als sie bei defektfreiem Zustand der Ladekabelverbindung wäre. Dadurch wird das gesamte System jedoch vor thermischer Überlast geschützt, ohne dass der gesamte Ladevorgang unterbrochen werden müsste. Somit kann der Ladevorgang unter Inkaufnahme einer gegenüber dem defektfreien Zustand verlängerten Ladezeit fortgesetzt werden.

Auf Seiten der Ladestation 30 wird nun über den Stromzähler 22 überwacht, ob die vom Ladesteuergerät 12 im Elektrofahrzeug 10 eingestellte Stromstärke auch tatsächlich derjenigen entspricht, die der Abstimmung zwischen den einzelnen Komponenten entspricht und die zudem vertragskonform zu den mit dem Fahrzeugnutzer vereinbarten Bedingungen ist. Falls sich hierbei eine unzulässige Abweichung ergibt, kann seitens der Ladestation 30 eine Unterbrechung der Stromlieferung durch Ausschalten des Schützes 22 erfolgen. Eine entsprechende Überwachung kann nicht nur über den jeweiligen Phasenstrom sondern auch über die Erfassung des vom Fahrzeug bezogenen Leistungswertes erfolgen.

Im Rahmen der vorliegenden Erfindung enthalten ist die Positionierung des Temperaturerfassungsmittels nicht nur direkt im Steckergehäuse sondern auch an einer außerhalb des Bereichs des Steckers liegenden Stelle der Ladekabelverbindung, z.B. im Bereich einer Steckdose. Durch die Wahl des jeweiligen Messortes kann eine entsprechende Defektlokalisierung erfolgen und entsprechende Maßnahmen, z.B. der Austausch des Ladekabels als solches oder der Austausch oder die Reparatur einzelner seiner Komponenten, eingeleitet werden.

Auch ist die Möglichkeit gegeben, einen detektierten Defekt des Ladekabels dem jeweiligen Benutzer, dessen Identität dem Energieversorgungsunternehmen bekannt ist, zu melden, um den Austausch oder die Reparatur des defekten Ladekabels zu veranlassen.

## Patentansprüche

1. Steckervorrichtung zur Verbindung eines Elektrofahrzeuges (10) über ein Ladekabel (30) mit einer Ladestation (20), aufweisend
- ein Gehäuse (40),
- elektrische Anschlusskontakte (41) zum Anschließen an eine Anschlusseinrichtung (13,23) in der Ladestation (20) oder in dem Elektrofahrzeug (10),
**dadurch gekennzeichnet, dass** die Steckervorrichtung ferner aufweist:
- ein in dem Gehäuse (40) angeordnetes Kodierungsmittel (42) für den Wert der über das Ladekabel (30) übertragbaren Stromstärke,
- ein im Bereich des Gehäuses (40) angeordnetes Temperaturerfassungsmittel (42a),
- eine Auswerteeinrichtung (43) zur Berechnung eines temperaturkorrigierten Kodierungswertes und
- ein Kommunikationsmittel (44) für dessen Übertragung an eine Ladestromsteuereinrichtung (12).

2. Steckervorrichtung nach Anspruch 1, **dadurch gekennzeichnet, dass** das Kodierungsmittel (42) und das Temperaturerfassungsmittel (42a) einer gemeinsamen Auswerteeinrichtung (43) zugeordnet sind und/oder das Temperaturerfassungsmittel im Gehäuse (40) angeordnet ist.

3. Steckervorrichtung nach einem der vorangegangenen Ansprüche 1 bis 2, **dadurch gekennzeichnet, dass** das Temperaturerfassungsmittel ein temperaturabhängiger elektrischer Widerstand (42a), insbesondere ein Thermistor, ist.

4. Steckervorrichtung nach Anspruch 3, **dadurch gekennzeichnet, dass** der Thermistor einen positiven Temperaturkoeffizienten oder einen negativen Temperaturkoeffizienten aufweist.

5. Steckervorrichtung nach einem der vorangegangenen Ansprüche, **dadurch gekennzeichnet, dass** das Kodierungsmittel (42a) ein ohmscher Widerstand ist.

6. Steckervorrichtung nach Anspruch 5, **dadurch gekennzeichnet, dass** der Thermistor parallel zu dem ohmschen Widerstand oder in Reihe zu dem ohmschen Widerstand geschaltet ist.

7. Steckervorrichtung nach Anspruch 3, **dadurch gekennzeichnet, dass** jedem Wert für die zulässige Stromstärke (16A, 32A, 63A) des Ladekabels jeweils ein bestimmter ohmscher Widerstandswert zugeordnet ist.

8. Steckervorrichtung nach Anspruch 7, **dadurch gekennzeichnet, dass** die ohmschen Widerstandswerte und die Temperaturkennlinien der Schaltungseinheit bestehend aus Thermistor und ohmschem Widerstand jeweils derart gewählt und aufeinander abgestimmt sind, dass für unterschiedliche Stromstärkewerte sich jeweils nicht überlappende Bereiche ergeben.

9. Steckervorrichtung nach Anspruch 8, **dadurch gekennzeichnet, dass** das Kodierungsmittel (42) zwischen einem Pilotsignalanschluss und dem Schutzleiter der Pilotsignalleitung angeordnet ist oder das Kodierungsmittel (42) zwischen zwei Anschlüssen der Pilotsignalleitung (44) angeordnet ist.

10. Mit einer Steckervorrichtung nach einem der Ansprüche 1 bis 9 ausgerüstetes Ladekabel.

11. System, bestehend aus einem Ladekabel (30) mit einer Steckervorrichtung nach einem der Ansprüche 1 bis 9 und einem Elektrofahrzeug (10) mit einer Aufnahmeeinrichtung (13), insbesondere einer Steckdose, für das Gehäuse (40) der Steckervorrichtung.

12. System, bestehend aus einem Ladekabel (30) mit einer Steckervorrichtung nach einem der Ansprüche 1 bis 9 und einer Ladestation (20) mit einer Aufnahmeeinrichtung (23), insbesondere einer Steckdose, für das Gehäuse (40) der Steckervorrichtung.

13. System nach einem der Ansprüche 11 oder 12, **dadurch gekennzeichnet, dass** das Temperaturerfassungsmittel (42a) in der Anschlusseinrichtung, insbesondere in einer Steckdose, (13, 23) der Ladestation (20) oder des Elektrofahrzeugs (10) angeordnet ist.

14. System nach Anspruch 12, **dadurch gekennzeichnet, dass** die Ladestation (20) Stromerfassungsmittel (22) zur insbesondere phasenbezogenen Erfassung des vom Elektrofahrzeug bezogenen Stromes aufweist und/oder die Ladestation (20) Mittel zur insbesondere phasenbezogenen Erfassung des vom Elektrofahrzeug bezogenen Leistungswertes aufweist.

15. System nach Anspruch 12, **dadurch gekennzeichnet, dass** das Stromerfassungsmittel einem Energiemengenzähler (22) zugeordnet ist.

## Claims

1. A plug device for connecting an electric vehicle (10) to a charging station (20) via a charging cable (30), comprising
- a housing (40),
- electrical contacts (41) for connecting to a socket (13, 23) in the charging station (20) or in the electric vehicle (10),
**characterized in that** the plug connector further comprises:
- an encoding means (42) for encoding the value of the current strength that can be transferred via the charging cable (30), arranged in the housing (40),
- a temperature recording means (42a) arranged in the region of the housing (40),
- an evaluation device (43) for calculating a temperature-adjusted encoding value, and a communication means (44) for transmitting said value to a charge current control device (12).

2. The plug device according to claim 1, **characterized in that**
the encoding means (42) and the temperature recording means (42a) are assigned to a common evaluation device (43), and/or the temperature recording means is arranged inside the housing (40).

3. The plug device according to either of the preceding claims 1 or 2, **characterized in that** the temperature recording means is a temperature-dependent electrical resistor (42a), particularly a thermistor.

4. The plug device according to claim 3, **characterized in that** the thermistor has a positive temperature coefficient or a negative temperature coefficient.

5. The plug device according to any of the preceding claims, **characterized in that** the encoding means (42a) is an ohmic resistor.

6. The plug device according to claim 5, **characterized in that** the thermistor is connected in parallel to ohmic resistor or in series to the ohmic resistor.

7. The plug device according to claim 3, **characterized in that** a specific ohmic resistance value is assigned to each value for a permissible current strength (16A, 32A, 63A) of the charging cable, respectively.

8. The plug device according to claim 7, **characterized in that** the ohmic resistance values and the temperature characteristic curves of the circuit unit consisting of a thermistor and an ohmic resistor are each selected and tuned to each other in such manner that non-overlapping ranges are provided for different current strength values.

9. The plug device according to claim 8, **characterized in that** the encoding means (42) is arranged between a pilot signal connection and the protective earth for the pilot signal wire, or the encoding means (42) is arranged between two connectors of the pilot signal wire (44).

10. A charging cable equipped with a plug device according to any of claims 1 to 9.

11. A system comprising a charging cable (30) with a plug device according to any of claims 1 to 9 and an electric vehicle (10) with a plug-in arrangement (13), particularly a socket, for the housing (40) of the plug device.

12. The system comprising a charging cable (30) with a plug device according to any of claims 1 to 9 and a charging station (20) with a plug-in arrangement (23), particularly a socket, for the housing (40) of the plug device.

13. The system according to either of claims 11 or 12, **characterized in that** the temperature recording means (42a) is arranged inside the connection device, particularly in a socket (13, 23) of the charging station (20) or the electric vehicle (10).

14. The system according to claim 12, **characterized in that** the charging station (20) comprises current recording means (22) for particularly phase-related recording of the current drawn by the electric vehicle and/or the charging station (20) comprises means for particularly phase-related recording of the load value drawn by the electric vehicle.

15. The system according to claim 12, **characterized in that** the current recording means is assigned to an energy quantity meter (22).

## Revendications

1. Dispositif de prise mâle pour relier un véhicule électrique (10) par l'intermédiaire d'un câble de charge (30) avec une station de charge (20), présentant
- un logement (40),
- des contacts de connexion électriques (41) en vue d'une connexion à un dispositif de connexion (13,23) dans le poste de charge (20) ou dans le véhicule électrique (10),
**caractérisé en ce que** le dispositif de prise mâle présente en outre :
- un moyen de codage (42) de la valeur d'intensité de courant transmissible par l'intermédiaire du câble de charge (30), disposé dans le logement (40),
- un moyen de détection de température (42a) disposé au niveau du logement (40),
- un dispositif d'évaluation (43) pour calculer une valeur de codage à température corrigée
- un moyen de communication (44) en vue de la transmission de celle-ci à un dispositif de commande de courant de charge (12).

2. Dispositif de prise mâle selon la revendication 1, **caractérisé en ce que** le moyen de codage (42) et le moyen de détection de température (42a) sont coordonnés à un dispositif d'évaluation (43) commun et/ou le moyen de détection de température est disposé dans le logement (40).

3. Dispositif de prise mâle selon une des revendications précédentes 1 à 2, **caractérisé en ce que** le moyen de détection de température est une résistance électrique (42a) dépendante de la température, notamment un thermistor.

4. Dispositif de prise mâle selon la revendication 3, **caractérisé en ce que** le thermistor présente un coefficient de température positif ou un coefficient de température négatif.

5. Dispositif de prise mâle selon une des revendications précédentes, **caractérisé en ce que** le moyen de codage (42a) est une résistance ohmique.

6. Dispositif de prise mâle selon la revendication 5, **caractérisé en ce que** le thermistor est branché en parallèle à la résistance ohmique ou en série à la résistance ohmique.

7. Dispositif de prise mâle selon la revendication 3, **caractérisé en ce que** une valeur de résistance ohmique déterminée respective est respectivement coordonnée à l'intensité de courant permissible (16A, 32A, 63A).

8. Dispositif de prise mâle selon la revendication 7, **caractérisé en ce que** les valeurs de résistance ohmique et les courbes caractéristiques de température de l'unité de circuit constituée du thermistor et de la résistance ohmique sont respectivement sélectionnées et harmonisées les unes aux autres, de sorte que des zones ne se superposant pas respectivement en résultent pour des valeurs d'intensité de courant différentes.

9. Dispositif de prise mâle selon la revendication 8, **caractérisé en ce que** le moyen de codage (42) est disposé entre une connexion de signal pilote et le conducteur de protection de la ligne de signaux pilotes ou le moyen de codage (42) est disposé entre deux connexions de la ligne de signaux pilotes (44).

10. Câble de charge équipé d'un dispositif de prise mâle selon une des revendications 1 à 9.

11. Système, constitué d'un câble de charge (30) avec un dispositif de prise mâle selon une des revendications 1 à 9 et un véhicule électrique (10) comportant un dispositif de réceptacle (13), notamment une prise de courant, destiné au logement (40) du dispositif de prise mâle.

12. Système, constitué d'un câble de charge (30) comportant un dispositif de prise mâle selon une des revendications 1 à 9 et un poste de charge (20) avec un dispositif de réceptacle (23), notamment une prise de courant, destiné au logement (40) du dispositif de prise mâle.

13. Système selon une des revendications 11 ou 12, **caractérisé en ce que** le moyen de détection de température (42a) est disposé dans le dispositif de connexion, notamment dans une prise de courant (13,23) du poste de charge (20) ou du véhicule électrique (10).

14. Système selon la revendication 12, **caractérisé en ce que** le poste de charge (20) présente un moyen de détection de courant (22) notamment à des fins de détection en rapport avec la phase du courant relatif au véhicule électrique et/ou le poste de charge (20) présente des moyens notamment de détection en rapport avec la phase de la valeur de puissance relatif au véhicule électrique.

15. Système selon la revendication 12, **caractérisé en ce que** le moyen de détection de courant est coordonné au compteur d'énergie (22).
